**Europäisches Patentamt**

**European Patent Office**

**Office européen des brevets**

(19)

(11) Veröffentlichungsnummer: **0 245 642**
**A1**

(12) # EUROPÄISCHE PATENTANMELDUNG

(21) Anmeldenummer: **87104849.2**

(22) Anmeldetag: **02.04.87**

(51) Int. Cl.4: **G01N 30/00 , G01N 30/12**

(30) Priorität: **14.05.86 DE 3616208**

(43) Veröffentlichungstag der Anmeldung:
**19.11.87 Patentblatt 87/47**

(84) Benannte Vertragsstaaten:
**DE GB IT NL**

(71) Anmelder: **GKSS Forschungszentrum**
**Geesthacht GmbH**
**Max-Planck-Strasse**
**D-2054 Geesthacht(DE)**

(72) Erfinder: **Reinhardt, Karl Horst, Dr.**
**Hauptstrasse 21**
**D-2059 Gülzow(DE)**
Erfinder: **Dittmer, Helmut**
**Nindorf Nr. 9**
**2122 Bleckede(DE)**
Erfinder: **Gandrass, Jürgen**
**Am Baum 34**
**D-2050 Hamburg 80(DE)**

(74) Vertreter: **Gottlob, Peter**
**Kernforschungszentrum Karlsruhe GmbH**
**Stabs. Patente und Lizenzen Weberstrasse 5**
**D-7500 Karlsruhe 1(DE)**

(54) **Vorrichtung zur Probenaufgabe durch Thermodesorption.**

(57) Die Erfindung betrifft eine Vorrichtung zur Probenaufgabe von an festen Adsorbentien gebundenen Verbindungen durch Thermodesorption, wobei

a) die Absorbentien in einem Probenröhrchen enthalten sind und

b) die Verbindungen mittels eines Trägergasstromes über einen Injektor, in dem das Probenröhrchen enthalten ist, auf eine Kapillarsäule eines Gaschromatographen desorbiert werden.

Die erfindungsgemäße Verbesserung dieser Aufgabe besteht darin, daß

c) auf dem Injektor eine Injektorverlängerung befestigbar ist, deren Ausnehmung zur Aufnahme des Probenröhrchens dient und mit der Ausnehmung im Injektor fluchtet,

d) eine Schubstange in der Injektorverlängerung geführt ist, mit der das Probenröhrchen aus einer Stellung in der Injektorverlängerung, in der mit Trägergas gespült wird, in eine Stellung innerhalb des Injektors überführbar ist,

e) ein Zapfen am Kopfende der Schubstange angeordnet ist, mit dem das Probenröhrchen erfaßbar ist und daß

f) durch den Zapfen hindurch eine das Innere des Probenröhrchens mit der Trägergaszuführung verbindende Bohrung vorgesehen ist.

EP 0 245 642 A1

## Vorrichtung zur Probenaufgabe durch Thermodesorption

Die Erfindung betrifft eine Vorrichtung zur Probenaufgabe von an festen Adsorbentien gebundenen Verbindungen durch Thermodesorption, wobei

a) die Adsorbentien in einem Probenröhrchen enthalten sind und

b) die Verbindungen mittels eines Trägergasstromes über einen Injektor, in dem das Probenröhrchen enthalten ist, auf eine Kapillarsäule eines Gaschromatographen desorbiert werden.

Die Erfindung betrifft insbesondere eine technische Vorrichtung zur Aufgabe der aus Luft oder Wasser durch Adsorption auf Probenröhrchen angereicherten Spurenstoffe auf die Kapillarsäule eines Gaschromatographen.

Luft und Wasser werden auf ihren Gehalt an organischen Spurenstoffen untersucht, indem ein Strom des zu untersuchenden Mediums über eine Adsorberpackung geleitet wird, auf der die Spurenstoffe angereichert und von der sie durch Ausheizen oder durch Elution mit einem Lösungsmittel wieder abgetrennt werden. Die verfügbare Substanz-Menge ist aber durch die Leistung der Pumpe und der Stromversorgung begrenzt. Man ist daher bestrebt, einen möglichst großen Anteil der gasammelten Spurenstoffe auf die Kapillarsäule eines Gaschromatographen aufzugeben. Extrakte lassen sich nämlich nicht auf weniger als 100 $\mu$l eindampfen, wenn man Fehler durch Substanzverluste vermeiden will. Die Aufgabe von Lösungsmittel-Mengen dieser Größe stößt aber auf Schwierigkei ten. Bei der Injektion flüssiger Proben auf die Trennsäule eines Gaschromatographen nimmt man daher in Kauf, daß nur ein kleiner Teil der Extrakte, maximal 10 $\mu$l, auf eine Kapillarsäule übertragen werden kann, wodurch große Probenmengen benötigt werden.

Zur Aufgabe der mit Hilfe eines festen Adsorbens gesammelten Spurenstoffe auf die Trennsäule eines Gaschromatrographen wurde die Technik der Thermodesorption entwickelt. Den verschiedenen Ausführungsformen dieser Technik ist gemeinsam, daß die beladenen Adsorber-Röhrchen in eine von Trägergas durchströmte, beheizte, gegen die Außenluft abgeschlossene Injektions-Kammer eingesetzt werden, so daß die adsorbierten Substanzen verlustfrei auf eine Kapillare überführt werden können.

Eine bekannte Vorrichtung besteht aus einem Probenrohr mit angeschlossener Kühlfalle. Das Probenrohr aus Quarz enthält eine Füllung von 200 mg Tenax-Harz, von der die Substanzen durch Ausheizen desorbiert und in der daran anschließenden Quarz-Kappillare durch Kühlung mit Stickstoff ausgefroren werden. Die desorbierten Bestandteile sind dadurch zu einem engen Band verdichtet. Diese Desorptionseinheit ist auch als Probenaufgabevorrichtung für größere Volumina von Flüssigproben verwendbar, die mit Hilfe einer kleinen Vorsäule gesammelt werden.

Wenn Wandeinflüsse nicht stören, kann die Vorsäule auch aus Metall bestehen. Eine derartige Säule ist z.B. 16 cm lang, 1/8 in. Edelstahl, gefüllt mit Tenax GC 60/80 mesh. Sie wird als Widerstand geschaltet oder mit einem beweglichen Ofen aufgeheizt.

Für den Fall, daß die Substanzen durch Ausheizen schnell abgegeben werden, kann auf das Ausfrieren verzichtet werden. Ein käufliches Gerät arbeitet mit einer Mikrowellenheizung, mit der die an Aktivkohle adsorbierten Substanzen, z.B. diverse Ether oder Dieselkraftstoff, desorbiert werden. Die Methode ist jedoch auf solche Adsorptionsmittel beschränkt, die sich durch Mikrowellen aufheizen lassen. Viele Polymere werden durch dieses Gerät nicht hoch genug aufgeheizt. Daher kann z.B. das zum Sammeln schwerflüchtiger Verbindungen besonders geeignete Adsorptionsmittel Tenax nicht mit dieser Vorrichtung ausgeheizt werden.

Die bekannten Aufgabevorrichtungen enthalten beheizte Ventile, DesorptionsÖfen oder beheizte Leitungen. Bei den einfacheren Vorrichtungen, mit denen das Adsorptionsröhrchen in den Injektor eingesetzt wird, sind Minusfehler durch unvollständige Desorption schwerflüchtiger Verbindungen zu erwarten.

Obwohl sich aufgrund seiner thermischen Stabilität Tenax auch zur Desorption bei höheren Temperaturen eignet, wird die Aufgabe, höhersiedende Verbindungen durch Ausheizen auf die Kapillarsäule zu übertragen, durch die bekannten Vorrichtungen nur unvollkommen gelöst. Die Gasschleusen eignen sich deshalb nicht zur Desorption höhersiedender Verbindungen, weil das Adsorptionsröhrchen nicht gegen die Injektorwandung abgedichtet werden kann. Daher wird nur ein schlecht reproduzierbarer Anteil des Trägergasstromes über die Adsorberpackung geleitet.

Bei Versuchen mit einem käuflichen Thermodesorptions-Gerät zeigte sich, daß schwerflüchtige Substanzen wie Hexachlor benzol und polychlorierte Biphenyle auch bei geschlossenem split nur mit erheblichen Verlusten auf die Kapillarsäule des Gaschromatographen überführt werden können.

Die der Erfindung gestellte Aufgabe besteht darin, die e.g. Vorrichtung derart zu verbessern, daß beladene Adsorberröhrchen auf besonders einfache Weise in einen Injektor eingesetzt werden und die vollständige Überführung der Probensubstanzen unter Vermeidung der Belastung des Adsorbers und der Trennsäule durch atmosphärische Luft ermöglichbar wird.

Die Lösung ist in den kennzeichnenden Merkmalen des Anspruches 1 beschrieben.

Die übrigen Ansprüche geben vorteilhafte Weiterbildungen der Erfindung wieder.

Mit Hilfe der auf den Injektor angeschraubten einfachen Schleusenvorrichtung für Adsorberröhrchen wird demnach erreicht, daß während des Ausheizens das Adsorptionsröhrchen im Injektor nicht nur im Kontakt mit dem Trägergas steht, sondern vom Trägergas mit konstantem Fluß durchströmt wird, so daß alle Substanzen direkt auf die Kapillare desorbiert werden. Die Schleusenvorrichtung ist im Prinzip für alle Injektoren zur splitlosen Probenaufgabe geeignet. Sie kann mit Adaptern an Injektoren verschiedener Hersteller angepaßt werden. Von besonderem Vorteil ist, daß das beladene Adsorberröhrchen ohne Betätigung von Ventilen in den mit Trägergas gespülten Injektor eingesetzt und im Trägergasstrom ausgeheizt wird, so daß die adsorbierten Substanzen direkt auf die Kapillare desorbiert werden. Damit entfallen auch Fehler durch Verunreinigungen mit Laborluft. Mit dieser Art der Probenaufgabe können auch größere Mengen flüssiger Proben aufgegeben werden. Damit entfällt die Notwendigkeit, die Extrakte einzudampfen.

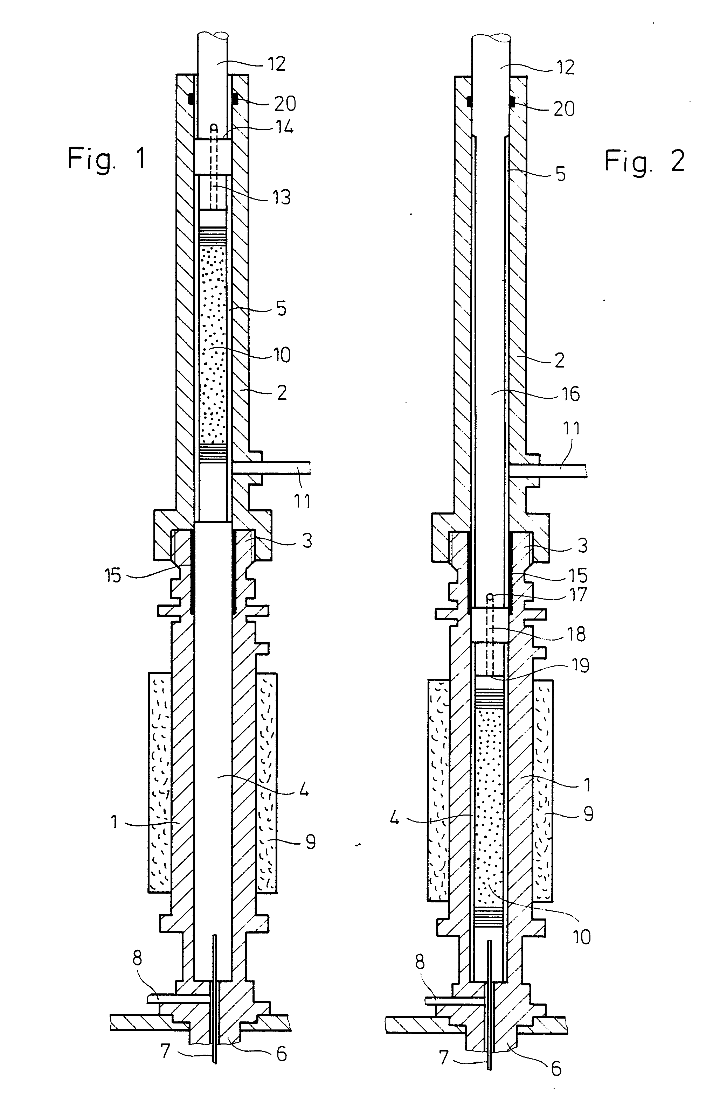

Die Erfindung wird im folgenden anhand eines Ausführungsbeispiels mittels der Figuren 1 bis 3 näher erläutert.

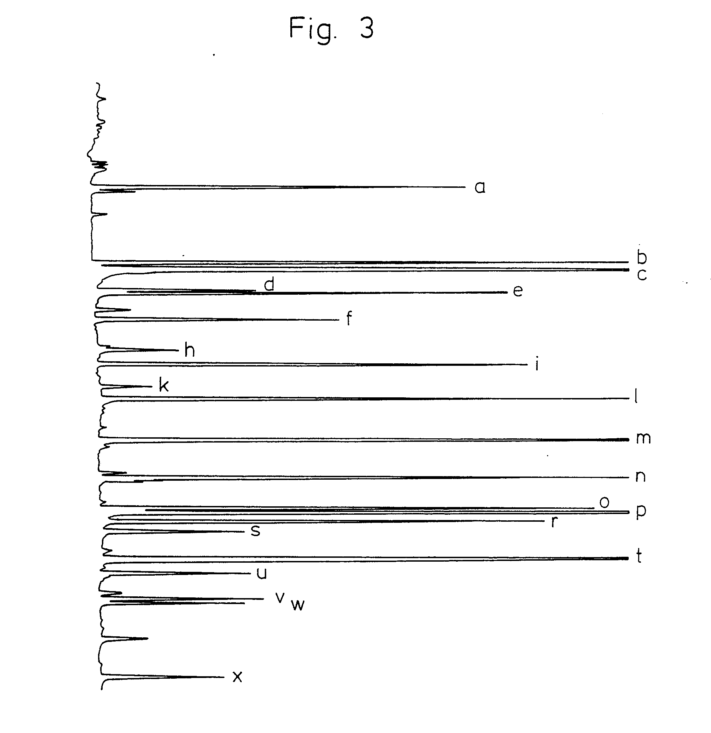

Die Figuren 1 und 2 zeigen im Schnitt den Injektor 1 mit Injektorverlängerung 2 in gekoppelter Situation. Beide Teile 1 und 2 weisen im Prinzip eine zylindrische, langgestreckte Form auf und sind miteinander stirnseitig verschraubbar, wozu eine Gewindekopplung 3 dient. Innerhalb beider Teile 1 und 2 ist jeweils eine Ausnehmung 4 und 5 vorgesehen, die den gleichen Querschnitt aufweisen und miteinander fluchten. Der Injektor 1 weist an der unteren Stirnseite 6 einen Kapillarsäulenanschluß 7 sowie eine Splitverbindung 8 zur Entnahme von Trägergas auf. Um den Injektor 1 herum ist eine Heizung 9 angeordnet, mittels der die Thermodesorption aus dem Probenröhrchen 10 bewirkt wird. An die Injektorverlängerung 2 ist im Bereich der Kopplungsstelle 3 eine Trägergaszuführung 11 seitlich angeschlossen, die mit den Ausnehmungen 4 und 5 in Verbindung steht.

Das beladene Probenröhrchen 10 wird mittels einer Schubstange 12 zuerst in die Injektorverlängerung 2 eingeführt, wozu ein Zapfen 13, z.B. aus Kunststoff, dient, der an der Stirnseite 14 der Schubstange 12 befestigt und in die obere Öffnung des Probenröhrchens 10, dicht passend, einsetzbar ist. In dieser Stellung, die in Figur 1 dargestellt ist, können die Ausnehmungen 4 und 5 in Verbindung steht.

Das beladene Probenröhrchen 10 wird mittels einer Schubstange 12 zuerst in die Injektorverlängerung 2 eingeführt, wozu ein Zapfen 13, z.B. aus Kunststoff, dient, der an der Stirnseite 14 der Schubstange 12 befestigt und in die obere Öffnung des Probenröhrchens 10, dicht passend, einsetzbar ist. In dieser Stellung, die in Figur 1 dargestellt ist, können die Ausnehmungen 4 und 5 mittels Trägergas (Zuführung 119 gespült werden.

In der Injektionsstellung gemäß Figur 2 ist die vordere Stirnseite des Probenröhrchens 10 auf den Anschluß der Kapillarsäule 7 nahezu dicht aufgesetzt. Hierzu wurde das Probenröhrchen 10 mittels der Schubstange 12 in die Ausnehmung 4 überführt. Zur Verbesserung der Führung bzw. Abdichtung gegen Gasleitungen, die bei dieser Betriebsweise des Injektors nicht benötigt werden, kann in die Ausnehmung 4 im Bereich der Kopplungsstelle 3 eine Hülse 15 vorgesehen sein, die dem Außendurchmesser des Zapfens 13 dichtend angepaßt ist.

Die Schubstange 12 ist im Anschluß an den Zapfen 13 in einem Bereich 16 verjüngt in einer Länge derart ausgebildet, daß die Länge ausreicht, daß in der Injektionsposition (Figur 2) Trägergas über die Zuführung 11 an ihr zu einer Öffnung 17 in der Mantelfläche der Schubstange 12 vorbeiströmen kann. Die Öffnung 17 bildet den Zutritt zu einer Bohrung 18, die durch die Schubstange 12 und den Zapfen 13 hindurch bis zu dessen vorderer Stirnseite 19 reicht, so daß eine durchgehende Verbindung für das Trägergas von der Zuführung 11 zum Kopfende des Probenröhrchens 10 gebildet wird. Andererseits ist die Länge des Bereiches 16 so kurz bemessen, daß der verstärkte Bereich der Schubstange 12 in dieser Injektionsposition von einer Dichtung 20 umfaßt wird. Die Dichtung 20 ist in der Wand der Injektorverlängerung 2 eingebettet. Hierdurch wird ein Austritt von Trägergas in die Umgebung verhindert und eine Zwangsführung des Trägergases durch das Probenröhrchen 10 bewirkt.

Das mit Tenax gefüllte Quarz-oder Glas-Probenröhrchen 10, das mit den zu untersuchenden Substanzen beladen wurde, hat genau das Maß des normalerweise für die split/splitlose Probenaufgabe verwendeten Injektoreinsatzes 2 und wird mittels der Schubstange 12, die an einem Ende den Teflonzapfen 13 trägt, in den beheizten Injektorblock 1 eingesetzt und zwischen 5 und 20 min bei 250 Grad ausgeheizt, während die Säule sich auf Zimmertemperatur befindet. Die Schubstange 12 wird vorzugsweise in abgesenkter Lage durch den oberen Dichtring 20 gegen die Atmosphäre abgedichtet; wenn sie angehoben ist (Figur 1), tritt Trägergas aus dem Injektor 1, 2 nach oben aus. Das Trägergas tritt in den Ringraum zwischen Schubstange 12 und Injektorverlängerung 2 ein und wird über die Bohrung 17 bis 19 auf die Adsorberfüllung des Röhrchens 10 geleitet. Der Teflonzapfen 13, auf dem das Röhrchen 10 aufsitzt, verhindert, daß Trägergas außen am Röhrchen 10 vorbeiströmt und erzwingt damit die Elution der schwerer flüchtigen Bestandteile. Diese sammeln sich am Anfang der auf Zimertemperatur gehaltenen Kapillare 7. Für Hexachlorbenzol und höhersiedende Stoffe ist nach Erfahrungen keine zusätzliche Kühlung erforderlich; überraschenderweise zeigte sich, daß die Peaks der höhersiedenden Stoffe auch dann scharf werden.

Figur 3 zeigt das Chromatogramm einer Standardlösung schwerflüchtiger Organochlorverbindungen, von der 2 μl auf das Tenax-Röhrchen 10 aufgegeben wurden, so daß die Mengen jeder einzelnen Substanz zwischen 20 und 70 pg betrugen. Das Röhrchen 10 wurde bei geschlossenem Split 20 min bei 250° im Injektor 1 ausgeheizt. Während dieser Zeit befand sich die Säule 7 auf Raumtemperatur. Das Chromatrogramm zeigt scharfe Peaks. Die Peakflächen sind etwa den mit der On-column-Aufgabe erzielten vergleichbar.

**Ansprüche**

1. Vorrichtung zur Probenaufgabe von an festen Adsorbentien gebundenen Verbindungen durch Thermodesorption, wobei
a) die Adsorbentien in einem Probenröhrchen enthalten sind und
b) die Verbindungen mittels eines Trägergasstromes über einen Injektor, in dem das Probenröhrchen enthalten ist, auf eine Kapillarsäule eines Gaschromatographen desorbiert werden, dadurch gekennzeichnet, daß
c) auf dem Injektor (1) eine Injektorverlängerung (2) befestigbar ist, deren Ausnehmung (5) zur Aufnahme des Probenröhrchens (10) dient und mit der Ausnehmung (4) im Injektor (1) fluchtet,
d) eine Schubstange (12) in der Injektorverlängerung (2) geführt ist, mit der das Probenröhrchen (10) aus einer Stellung in der Injektorverlängerung (2), in der mit Trägergas gespült wird, in eine Stellung innerhalb des Injektors (1) überführbar ist,
e) ein Zapfen (13) am Kopfende (14) der Schubstange (12) angeordnet ist, mit dem das Probenröhrchen (10) erfaßbar ist und daß
f) durch den Zapfen (13) hindurch eine das Innere des Probenröhrchens (10) mit der Trägergaszuführung (11) verbindende Bohrung (17 - 19) vorgesehen ist.

2. Vorrichtung nach Anspruch 1, dadurch gekennzeichnet, daß die Schubstange (12) in einem Bereich (16) im Anschluß an den Zapfen (13) verjüngt ausgebildet ist und die Bohrung (17 - 19) von der Stirnseite (19) des Zapfens (13) bis zur Mantelfläche der Schubstange (13) in diesem verjüngten Bereich (16) führt.

3. Vorrichtung nach Anspruch 1 und 2, dadurch gekennzeichnet, daß die Ausnehmung (5) in der Injektorverlängerung (2) gegenüber der Schubstange (12) und der Umgebung an der freien Stirnseite (20) abgedichtet ist.

4. Vorrichtung nach Anspruch 1 oder einem der folgenden, dadurch gekennzeichnet, daß die Injektorverlängerung (2) auf den Injektor (1) aufschraubbar ist.

5. Vorrichtung nach Anspruch 1 oder einem der folgenden, dadurch gekennzeichnet, daß die Trägergaszuführung (11) seitlich an der Injektorverlängerung (2) angeordnet ist.

6. Vorrichtung nach Anspruch 1 oder einem der folgenden, dadurch gekennzeichnet, daß in die Ausnehmung (4) des Injektors (1) im Koppelbereich (3) mit der Injektorverlängerung (2) eine Führungshülse (15) für den Zapfen (13) eingesetzt ist.

7. Vorrichtung nach Anspruch 1 oder einem der folgenden, dadurch gekennzeichnet, daß der Zapfen (13) dicht in die Öffnung auf der einen Stirnseite des Probenröhrchens (10) einsetzbar ist.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 073 176  (J. REKTORIK) <br> * Anspruch 1 * <br> --- | 1 | G 01 N  30/00 <br> G 01 N  30/12 |
| A | FR-A-2 558 958  (COAL INDUSTRY) <br> * Zusammenfassung * <br> --- | 1 | |
| A | EP-A-0 027 601  (SIEMENS) <br> * Zusammenfassung * <br> --- | 1 | |
| A | PATENT ABSTRACTS OF JAPAN, Band 7, Nr. 117 (P-198)[1262], 21. Mai 1983; & JP-A-58 35 458 (KOGYO GIJUTSUIN (JAPAN)) 02-03-1983 <br> * Zusammenfassung * <br> --- | 1 | |
| A | JOURNAL OF HIGH RESOLUTION CHROMATOGRAPHY AND CHROMATOGRAPHY COMMUNICATIONS, Band 3, Nr. 7, Juli 1980, Seiten 351-352, Dr. Alfred Huethig Publishers, Heidelberg, DE; S.N. CHESLER et al.: "An electrically heated sampler/injector suitable for use with high efficiency gas chromatographic columns" <br> * Insgesamt * <br> ---        -/- | 1 | RECHERCHIERTE SACHGEBIETE (Int. Cl.4) <br><br> G 01 N  30/00 <br> G 01 N  30/12 |

Der vorliegende Recherchenbericht wurde für alle Patentansprüche erstellt.

| Recherchenort | Abschlußdatum der Recherche | Prüfer |
|---|---|---|
| DEN HAAG | 14-08-1987 | CALLEWAERT-HAEZEBROU |

| | EINSCHLÄGIGE DOKUMENTE | | | Seite 2 |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| A | JOURNAL OF HIGH RESOLUTION CHROMATOGRAPHY AND CHROMATOGRAPHY COMMUNICATIONS, Band 5, Nr. 7, Juli 1982, Seiten 382-384, Dr. Alfred Huethig Publishers, Heidelberg, DE; H.-J. NEU et al.: "A novel technique for thermal desorption from active charcoal" * Insgesamt * --- | 1 | | |
| A | JOURNAL OF HIGH RESOLUTION CHROMATOGRAPHY AND CHROMATOGRAPHY COMMUNICATIONS, Band 7, Nr. 8, August 1984, Seiten 477-479, Dr. Alfred Huethig Publishers, Heidelberg, DE; D. LANGLOIS et al.: "Device for injection of absorbent-trapped compounds on to a WCOT column" * Insgesamt * --- | 1 | RECHERCHIERTE SACHGEBIETE (Int. Cl.4) | |

Der vorliegende Recherchenbericht wurde für alle Patentansprüche erstellt.

| Recherchenort DEN HAAG | Abschlußdatum der Recherche 14-08-1987 | Prüfer CALLEWAERT-HAEZEBROU |
|---|---|---|